# FASCICULE DE BREVET EUROPEEN

(11) **EP 4 547 936 B1**
(45) Date de publication et mention de la délivrance du brevet: **04.03.2026**
(21) Numéro de dépôt: 23755118.9
(22) Date de dépôt: 28.06.2023
(51) Int. Cl.: E21B 41/00, E21B 43/30, B65G 5/00

(54) **PROCÉDÉ DE STOCKAGE ET D'EXPLOITATION D'UN PREMIER GAZ ET D'UN DEUXIÈME GAZ PLUS DENSE QUE LE PREMIER GAZ DANS UN RÉSERVOIR AQUIFÈRE OU DÉPLÉTÉ**
VERFAHREN ZUM SPEICHERN UND ZUR NUTZUNG EINES ERSTEN GASES UND EINES ZWEITEN GASES, WELCHES DICHTER ALS DAS ERSTE GAS IST, IN EINEM AQUIFER ODER EINEM AUSGESCHÖPFTEN RESERVOIR
METHOD FOR STORING AND USING A FIRST GAS AND A SECOND GAS DENSER THAN THE FIRST GAS IN A WATER BEARING OR DEPLETED RESERVOIR

(30) Priorité: 29.06.2022 FR 2206507
(43) Date de publication de la demande: 07.05.2025
(73) Titulaire: Storengy, 92250 La Garenne-Colombes (FR)
(72) Inventeur: EGERMANN, Patrick, 46000 CAHORS (FR); RENIER, Christophe, 75009 PARIS (FR); KERMARREC, Emmanuel, 75002 PARIS (FR); PATRIARCHE, Delphine, 94230 CACHAN (FR)
(74) Mandataire: Cabinet Beau de Loménie
(86) Numéro de dépôt international: PCT/FR2023/050987
(87) Numéro de publication internationale: WO 2024/003506

(56) Documents cités:
- FR-A1- 2 168 942
- US-A- 3 175 614
- US-A- 3 393 738
- SHI ZHUOFAN ET AL: "Impacts of the subsurface storage of natural gas and hydrogen mixtures", INTERNATIONAL JOURNAL OF HYDROGEN ENERGY, ELSEVIER, AMSTERDAM, NL, vol. 45, no. 15, 4 February 2020 (2020-02-04), pages 8757 - 8773, XP086076959, ISSN: 0360-3199, [retrieved on 20200204], DOI: 10.1016/J.IJHYDENE.2020.01.044

## Description

### Domaine Technique

La présente invention concerne le stockage et l'exploitation de gaz dans des réservoirs souterrains, en particulier le stockage dans des réservoirs aquifères ou déplétés. L'invention trouve notamment application dans le stockage de dihydrogène.

### Technique antérieure

On connait les réservoirs de stockage de gaz souterrains aquifères, dans lesquels le réservoir a sensiblement une forme de dôme, composé de roche poreuse dans laquelle le gaz et stocké. Le gaz est maintenu dans le réservoir par une couche imperméable qui définit cette forme de dôme et le toit du réservoir (la couche imperméable peut être appelée roche de couverture), et par de l'eau qui définit le fond du stockage. On connait également des réservoirs appelés réservoirs déplétés, ayant la même structure que les aquifères mais qui contenaient initialement des hydrocarbures (gaz ou huile) avec un peu d'eau et non de l'eau uniquement.

Ces réservoirs sont traditionnellement utilisés pour stocker du gaz naturel. Il existe cependant un besoin pour stocker dans des réservoirs souterrains d'autres types de gaz, et en particulier du dihydrogène. En effet, la production de dihydrogène est destinée à s'accroitre, et les stockages en surface de dihydrogène sont limités en termes de volume.

Le document FR 2 168 942 décrit un procédé dans lequel on va stocker un gaz appelé gaz secondaire plus dense en dessous d'un autre gaz, dans un réservoir aquifère.

On connait du document « Enabling large-scale hydrogen storage in porous media - the scientific challenges » (Heinemann N. et al., 2021, Energy Environ. Sci., 2021, 14, 853-864.) le stockage de dihydrogène en milieux poreux/perméables, et l'utilisation de puits pour injecter et soutirer du gaz.

Le stockage de dihydrogène en milieux poreux présente néanmoins des difficultés à cause de mécanismes réactionnels qui peuvent se produire du fait des interactions entre l'eau de l'aquifère et la roche, ces interactions étant notamment connues du document « Overview of available test results and regulatory limits for Hydrogen admission into existing natural gas infrastructure and end use » (Marcogaz Technical Association of the European Natural Gaz Industry, 2019).

On connait en particulier deux types de réactions :
- les réactions abiotiques, qui apparaissent lorsque les interactions se produisent avec la roche en fonction de déséquilibres géochimiques consécutifs à l'introduction de dihydrogène (et de sa dissolution dans l'eau) mais aussi de leurs cinétiques (une vitesse réactionnelle très lente ayant peu d'impacts industriels in fine), et
- les réactions biotiques, qui apparaissent lorsque les interactions ont pour origine le développement de bactéries anaérobies présentes dans le milieu et se nourrissant, entres autres, de dihydrogène dissous dans l'eau. Ces réactions peuvent entraîner des changements dans la chimie de l'eau (par exemple au niveau du pH) pouvant induire des réactions abiotiques secondaires.

Ces réactions peuvent avoir un impact sur la qualité du gaz soutiré (par exemple parce qu'elles conduisent à la formation de sulfure d'hydrogène (H2S). Elles peuvent également avoir un impact sur l'efficacité du stockage puisque du dihydrogène peut être consommé. Enfin, ces réactions affectent les performances du stockage puisque les réactions peuvent modifier les propriétés pétrophysiques du réservoir si la perméabilité de certaines parties du réservoir est dégradée de manière non-réversible.

On connait des méthodes pour caractériser les risques réactionnels liés à l'introduction de dihydrogène dans un réservoir poreux, mais elles requièrent la mise en œuvre d'étapes de caractérisation et de validation complexes qui ne permettent ni d'écarter complètement les risques, ni d'avancer suffisamment rapidement pour développer un projet industriel.

On connait notamment les estimations des risques en amont :
- on peut utiliser des études statistiques conduites sur des populations bactériennes échantillonnées dans divers gisements et stockages d'hydrocarbures (Strobel G., Hagemann B., Huppertz T.M., Ganzer L.: "Underground bio-methanation: Concept and potential", Renewable and Sustainable Energy Reviews, 123, 2020; ou encore Thaysen E.M. et al, 2021, Hydrogen Storage in Porous Media as a Basis for Site Selection, Renewable and Sustainable Energy Reviews, Preprint 5) pour qualifier le risque de réactions biotiques en amont compte tenu des caractéristiques du site étudié (notamment sa température et la composition de l'eau),
- on peut utiliser des outils de simulations géochimiques sur la base des informations connues sur le site étudié pour qualifier le risque de réactions abiotiques, selon des méthodes connues des documents suivants :
   - Truche, L., Jodin-Caumon M.-C., Lerouge C., Berger G., Mosser-Ruck R., Giffaut E., Michau D., 2013, Sulphide mineral reactions in clay-rich rock induced by high hydrogen pressure. Application to disturbed or natural settings up to 250 °C and 30 bar, Chemical Geology 351 (2013) 217-228,
   - Thüns N., Krooss B.M., Zhang Q., Stanjek H., 2019, The effect of H2 pressure on the reduction kinetics of hematite at low temperatures, International Journal of Hydrogen Energy 44 (2019) 27615-27625,
   - Shi Z. et al, 2020, Impacts of the subsurface storage of natural gas and hydrogen mixtures, International Journal of Hydrogen Energy 45 (2020) 8757-8773, et
   - Ziegler L., 2021, H2_ReacT - Transport of hydrogen in rocks considering abiotic chemical and microbial redox reactions, presentation at the Underground Sun Conversion Stakeholder Workshop, April 14th, 2021.

On connait également des méthodes de caractérisation en laboratoire:
- Par exemple, si les conditions d'un site correspondent à une zone à risque, on peut mettre en œuvre un échantillonnage des roches réservoirs, de l'eau de formation mais aussi de la faune bactérienne, ce qui nécessite un protocole dédié (prélèvements biologiques).
- On peut évaluer en laboratoire des réactions via des expériences en conditions de réservoir avec les fluides visés et des morceaux de roche dans des autoclaves préalablement stérilisées puis ensemencées avec les cultures bactériennes issues de prélèvements biologiques représentatifs. Ces expériences permettent d'identifier les réactions prépondérantes ainsi que leurs cinétiques (Ranchou-Peyruse M. et al, 2019, Geological gas-storage shapes deep life, Environmental Microbiology (2019) 21(10), 3953-3964). On peut noter que les évolutions induites en termes de porosité et perméabilité font encore l'objet de développements R&D très amont et ne peuvent pas être déduites directement de ce type d'expériences (Ott H., 2021, BioPore - Motivation, Project and Findings, presentation at the Underground Sun Conversion Stakeholder Workshop, April 14th, 2021). Cela constitue ainsi une source additionnelle d'incertitudes.

On connait également des caractérisations et simulations à l'échelle du réservoir :
- Par exemple, une fois cette étape de caractérisation au laboratoire menée, il devient possible d'initier le développement d'un modèle compositionnel et réactionnel et de réaliser de premières évaluations à l'échelle du réservoir.
- A ce stade, il est aussi recommandé de dimensionner puis de mettre en œuvre une opération pilote sur site à suffisamment grande échelle afin de collecter les données nécessaires pour valider les étapes de mise à l'échelle du modèle réservoir. Valider cette étape s'avère primordial afin de trouver le bon compromis entre le temps de calcul (nombre de mailles) et la bonne représentation des hétérogénéités géologiques dans un contexte où le nombre de mécanismes à prendre en compte est élevé, le tout avec une géométrie 3D.

Si le stockage de gaz naturel est connu, le stockage d'autres gaz comme par exemple du dihydrogène reste difficile. Par exemple, le stockage de dihydrogène présente des risques spécifiques.

Actuellement, on connait le stockage de dihydrogène dans des cavités salines. Le stockage de dihydrogène en réservoir poreux reste au stade de l'étude, de la validation, sans qu'aucun projet industriel ne soit en cours de développement.

Cela étant dit, les études actuelles ont permis de confirmer que de tels stockages en réservoir poreux sont réalisables avec des risques maîtrisés, mais que dans des conditions particulièrement favorables qui limitent les cas dans lesquelles un stockage est réalisable : faible activité de l'aquifère, température comprise entre 25 et 50°C, composition de l'eau sans sulfates, minéralogie sans pyrites ou oxydes de fer.

Les solutions actuelles pour stocker des gaz comme du dihydrogène sont donc particulièrement limitées, du fait du risques de réaction du dihydrogène dans le sous-sol pouvant induire une dégradation de la qualité du gaz au soutirage, une perte d'une fraction significative du dihydrogène stocké, et enfin une réduction de la perméabilité du réservoir induite par les réactions biotiques et/ou abiotiques.

L'invention vise à résoudre certains au moins des inconvénients précités.

### Exposé de l'invention

À cet effet, l'invention propose un procédé de stockage et d'exploitation d'un premier gaz et d'un deuxième gaz plus dense que le premier gaz dans un réservoir aquifère ou déplété, au moyen d'une installation comprenant :
- un premier puits (éventuellement un ou plusieurs premiers puits) débouchant dans une partie supérieure du réservoir et connecté à un réseau de transport du premier gaz,
- un deuxième puits (éventuellement un ou plusieurs deuxièmes puits) débouchant sur une partie inférieure du réservoir (la partie supérieure étant au-dessus de la partie inférieure) et connecté à un réseau de transport du deuxième gaz,
le procédé comprenant un stockage du premier gaz dans la partie supérieure du réservoir, un stockage du deuxième gaz dans la partie inférieure du réservoir, une exploitation du premier gaz par le premier puits, et une exploitation du deuxième gaz par le deuxième puits, l'exploitation du premier pouvant être mise en œuvre de manière simultanée et séparée de l'exploitation du deuxième gaz.

L'invention propose donc d'exploiter, c'est-à-dire injecter ou soutirer du gaz, deux gaz distincts par deux puits différents mais qui débouchent sur un même réservoir. Cette exploitation peut être mise en œuvre de manière simultanée et séparée, ce qui signifie que l'on peut soutirer/injecter le premier gaz alors même que l'on soutire/injecte le deuxième gaz. En outre, on peut injecter/soutirer le premier gaz alors que l'on ne met en œuvre aucune action de soutirage/injection sur le deuxième gaz (typiquement on le stocke), et l'on peut injecter/soutirer le deuxième gaz alors que l'on ne met en œuvre aucune action de soutirage/injection sur le premier gaz (typiquement on le stocke), bien que dans ce cas il y a un gaz qui n'est pas exploité à proprement parler (il est stocké). En d'autres termes, l'exploitation du premier gaz est mise en œuvre indépendamment de l'exploitation du deuxième gaz.

A titre indicatif et sans que cela ne soit limitatif, on peut exploiter un réservoir souterrain unique pour deux gaz, d'une manière correspondant à une exploitation sur deux réservoirs souterrains de stockage complètement indépendants correspondant chacun à l'un des gaz, et étant connectés à leurs réseaux de transport et ateliers de traitement respectifs. Cette caractéristique est particulièrement importante, dans un contexte où les besoins en stockage de nouveaux gaz augmentent, avec utilisation de réseaux de transport spécifiques, tout en ayant toujours besoin de stockage pour les gaz utilisés historiquement, et où les réservoirs souterrains adaptés au stockage sont peu nombreux.

En fait et à titre indicatif, pour chaque gaz, on peut avoir un atelier de traitement entre le réservoir et le réseau de transport du gaz (il peut donc y avoir deux ateliers de traitement pour deux gaz différents stockés pour leurs deux réseaux distincts). Un atelier de traitement d'un gaz peut mettre en œuvre une déshydratation et une désulfuration du gaz, par exemple.Ces exploitations simultanées et séparées sont par exemple mises en œuvre pour un domaine donné de volumes du premier gaz et du deuxième gaz. Ce domaine donné peut être une répartition donnée de volumes, de sorte que l'on maintient toujours un volume non-nul donné du premier gaz (par exemple compris dans une plage de volumes) et un volume donné non-nul donné du deuxième gaz dans le réservoir (par exemple compris dans une plage de volumes).

Du fait de la différence de densité entre les deux gaz et du mode d'injection ciblé, les deux gaz restent séparés à l'intérieur du réservoir dans la direction verticale, et la personne du métier pourra déterminer la profondeur à laquelle les puits débouchent pour obtenir cette configuration, en fonction notamment des volumes à stocker.

On peut noter que l'on utilise la notion de volume dans la présente demande. Bien entendu, ces volumes sont à la pression à laquelle les gaz sont stockés dans un réservoir, c'est-à-dire à une pression adaptée pour ce réservoir, que la personne du métier saura déterminer. Cette pression adaptée est celle qui est effective au gaz à la profondeur du réservoir pour son stockage.

Il a donc été observé qu'il est possible de stocker et d'exploiter de manière indépendante deux gaz différents dans le sous-sol.

En outre, on peut noter que si le premier gaz est un gaz qui peut être impliqué dans des réactions en phase aqueuse qui pourraient affecter son stockage et son exploitation (en termes de qualité du gaz, d'énergie perdue, de réduction de la perméabilité/porosité), le premier gaz se retrouve ici séparé de l'eau mobile, et donc la plus réactive, au fond du stockage du fait de la présence du deuxième gaz entre le premier gaz et l'eau. L'invention améliore ainsi le stockage d'au moins le premier gaz, si ce gaz participe à des réactions en phase aqueuse qui dégrade son stockage.

Selon un mode de mise en œuvre particulier, le premier gaz est du dihydrogène.

L'invention est particulièrement bien adaptée pour un premier gaz moins dense que le deuxième qui est du dihydrogène Cela résulte du fait que le deuxième gaz plus dense, qui est dans la partie inférieure, est celui qui sera en contact avec l'eau de l'aquifère (ou du réservoir déplété). Or, les réactions qui ont un impact sur le stockage du dihydrogène se produisent généralement en phase aqueuse après une dissolution d'une partie du dihydrogène dans l'eau (on peut noter que la pression et la température, ainsi que les mouvements de l'aquifère induits par l'activité de stockage peuvent affecter le stockage), qui est limitée par la présence du deuxième gaz entre le premier gaz et l'eau au fond du réservoir qui joue ainsi un rôle de tampon pour limiter les réactions indésirables.

Selon un mode de mise en œuvre particulier, le deuxième est du gaz naturel.

Le stockage de gaz naturel en tant que deuxième gaz est particulièrement bien adapté pour être le gaz qui sera à l'interface avec l'eau au fond du réservoir, le stockage de gaz naturel en aquifère ou en réservoir déplété étant bien maitrisé. En outre, le gaz naturel est bien adapté lorsque le dihydrogène est le premier gaz.

Selon un mode de mise en œuvre particulier, l'exploitation du premier gaz comporte une exploitation d'un seul volume dit utile du premier gaz, le procédé comportant une étape de définition du volume utile du premier gaz, le volume total du premier gaz dans le réservoir étant égal à la somme du volume utile du premier gaz avec un volume dit coussin (« cushion gas » en anglais) du premier gaz situé à l'interface avec le deuxième gaz.

Ainsi, dans ce mode de mise en œuvre particulier, on limite l'exploitation du premier gaz de sorte à toujours maintenir un volume de premier gaz qui ne sera par exemple pas soutiré (le volume coussin), et qui est situé à l'interface avec le deuxième. Cela permet de n'exploiter qu'une portion de bonne qualité (par exemple en termes de composition) du premier gaz, car le volume coussin peut comporter du deuxième gaz qui diffuse vers le premier gaz.

Par exemple, le volume coussin peut être fixe. Le volume utile peut être défini sous la forme d'une plage de volumes.

Selon un mode de mise en œuvre particulier, l'exploitation du deuxième gaz comporte une exploitation d'un seul volume dit utile du deuxième gaz, le procédé comportant une étape de définition du volume utile du deuxième gaz, le volume total du deuxième gaz dans le réservoir étant égal à la somme du volume utile du deuxième gaz avec un volume dit coussin supérieur du deuxième gaz situé à l'interface avec le premier gaz et un autre volume dit coussin inférieur du deuxième gaz situé sous le volume utile du deuxième gaz (en particulier dans la zone d'interface avec l'eau).

Dans ce mode de mise en œuvre particulier, on limite l'exploitation du deuxième gaz de sorte à toujours maintenir deux volumes du deuxième gaz qui ne sont pas soutirés (les deux volumes coussins), qui sont respectivement situés à l'interface avec le premier gaz (voire le volume coussin du premier gaz) et avec l'eau du réservoir. Cela permet de n'exploiter qu'une portion de bonne qualité (par exemple en termes de composition) du deuxième gaz, car les volumes coussins peuvent comporter du premier gaz qui diffuse vers le deuxième gaz, ou être affectés par le contact avec l'eau.

Selon un mode de mise en œuvre particulier, les étapes de définitions du volume utile du premier gaz et du volume utile du deuxième gaz sont réalisées au cours d'une phase préalable dans laquelle on utilise des données d'observation du fonctionnement du réservoir et une modélisation du réservoir.

Cette phase peut être réalisée préalablement au stockage et à l'exploitation indépendante du premier et du deuxième gaz, par exemple alors que le réservoir ne comporte qu'un seul type de gaz (par exemple le deuxième gaz).

Selon un mode de mise en œuvre particulier, les données d'observation du fonctionnement du réservoir sont obtenues par des tests de traçage ou par des données d'observation de l'exploitation successive de gaz différents dans le réservoir.

Selon un mode de mise en œuvre particulier, le procédé comprend une mise à jour du volume utile du premier gaz et du volume utile du deuxième gaz tenant compte de données d'observation de l'exploitation du premier gaz ou de l'exploitation du deuxième gaz.

Cette mise à jour peut impliquer une modification des volumes coussins utilisés, pour maintenir une bonne qualité du gaz soutiré. Par exemple, si l'on détecte du deuxième gaz dans le soutirage du premier gaz avec une concentration au-delà d'une valeur cible de concentration, on peut augmenter le volume coussin du premier gaz.

Selon un mode de mise en œuvre particulier, on stocke un troisième gaz plus dense que le deuxième gaz entre le deuxième gaz et l'eau du réservoir.

Ce troisième gaz peut être utilisé en tant que gaz coussin au niveau de l'interface avec l'eau.

Selon un mode de mise en œuvre, le réservoir comporte initialement uniquement du deuxième gaz, ou, si le procédé comporte le stockage du troisième gaz, uniquement du troisième gaz.

Ce mode de mise en œuvre est particulièrement bien adapté au stockage de premier gaz, par exemple du dihydrogène, dans un réservoir initialement utilisé pour stocker du gaz naturel (le deuxième gaz).

L'invention propose également une installation de stockage et d'exploitation d'un premier gaz et d'un deuxième gaz plus dense que le premier gaz dans un réservoir aquifère ou déplété, comprenant :
- un premier puits (éventuellement un ou plusieurs premiers puits) débouchant dans une partie supérieure du réservoir et connecté à un réseau de transport du premier gaz,
- un deuxième puits (éventuellement un ou plusieurs premiers puits) débouchant sur une partie inférieure du réservoir et connecté à un réseau de transport du deuxième gaz,
l'installation étant configurée pour permettre un stockage du premier gaz dans la partie supérieure du réservoir, un stockage du deuxième gaz dans la partie inférieure du réservoir, une exploitation du premier gaz par le premier puits, et une exploitation du deuxième gaz par le deuxième puits, l'exploitation du premier gaz pouvant être mise en œuvre de manière simultanée et séparée de l'exploitation du deuxième gaz.

Cette installation peut être configurée pour mettre en œuvre tous les modes de mise en œuvre du procédé tel que défini ci-avant.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :
[Fig. 1] La figure 1 est une représentation schématique d'une installation selon un exemple.
[Fig. 2] La figure 2 est une représentation schématique d'une installation selon un autre exemple.
[Fig. 3] La figure 3 est une représentation schématique d'une installation selon un autre exemple.
[Fig. 4] La figure 4 est une représentation schématique de la répartition des volumes selon un exemple.
[Fig. 5] La figure 5 illustre les étapes d'un procédé selon un exemple.
[Fig. 6] La figure 6 illustre une modélisation numérique de la concentration volumique du gaz naturel à différentes périodes de stockage selon un exemple.
[Fig. 7] La figure 7 illustre les évolutions modélisées de la fraction de dihydrogène produit en partie haute et en partie basse du réservoir selon un exemple.
[Fig. 8] La figure 8 est une représentation schématique d'une installation.

### Description des modes de réalisation

On va maintenant décrire des procédés de stockage et d'exploitation de deux gaz distincts, et les installations utilisées pour mettre en œuvre ces stockages.

Dans la présente description, les stockages sont des réservoirs aquifères ou des réservoirs déplétés (aquifères contenant initialement des hydrocarbures (gaz ou huile), avec par exemple un aquifère pouvant présenter une activité variable, dans lesquels le réservoir a sensiblement une forme de dôme, composé de roche poreuse dans laquelle le gaz et stocké. Le gaz est maintenu dans le réservoir par une couche imperméable qui définit cette forme de dôme et le toit du réservoir (la couche imperméable peut être appelée roche de couverture), et par de l'eau liquide qui définit le fond du stockage.

L'invention trouve application dans le stockage et l'exploitation d'un gaz peu dense qui peut éventuellement réagir en phase aqueuse (par exemple après dissolution dans l'eau), qu'elle facilite en stockant en outre un deuxième gaz plus dense entre le premier gaz et l'eau du réservoir.

Dans la présente description, le premier gaz est du dihydrogène et le deuxième gaz du gaz naturel. D'autres premiers gaz peuvent être utilisés et d'autres deuxième gaz peuvent être utilisés, par exemple de l'hélium (H2) en tant que premier gaz avec de l'azote (N2) en tant que deuxième gaz peuvent être utilisés.

Pour le dihydrogène, stocker et exploiter ce gaz dans un réservoir aquifère ou déplété est délicat du fait des réactions (abiotiques, biotiques) qui ont un impact sur les performances du stockage et de l'exploitation (notamment en termes de qualité du gaz, d'énergie perdue, et de réduction de la perméabilité/porosité). Il a été observé que ces réactions se produisent généralement en phase aqueuse après dissolution d'une partie du dihydrogène gazeux dans l'eau. Comme on le conçoit, la pression et la température ont également un impact sur ces réactions, tout comme le transport via les mouvements de l'aquifère induits par l'activité de stockage et d'exploitation.

Pour limiter l'impact de ces réactions, on utilise un deuxième gaz plus dense que le dihydrogène pour agir en tant que coussin et séparer le dihydrogène de la phase aqueuse. Ainsi, pour tout type de réservoir aquifère ou déplété, on peut limiter les risques de perte de qualité, d'énergie perdue, et de réduction de la perméabilité/porosité.

Le gaz naturel ayant un potentiel réactionnel marginal, il est apparu qu'il est possible de l'utiliser comme gaz coussin par rapport au dihydrogène. En outre, dans la mesure où un puits débouche dans la partie inférieure du réservoir où sera stocké le gaz naturel, on pourra en outre l'exploiter de manière indépendante.

Comme on le conçoit, lorsqu'un réservoir est déjà utilisé pour stocker du gaz naturel (il comporte initialement principalement du méthane), on peut utiliser ce gaz comme deuxième gaz et donc comme gaz coussin par rapport au premier gaz qui est du dihydrogène.

Pour un premier remplissage (un réservoir qui contient initialement de l'eau), on pourra utiliser d'autres gaz, comme par exemple de l'azote en tant que deuxième gaz. En fait, on pourra choisir le deuxième gaz plus dense que le premier en fonction des réactions chimiques auxquelles il participe en phase aqueuse. On pourra en outre choisir le deuxième gaz de sorte qu'il n'introduise pas de risques induits comme de la corrosion liée à l'introduction de dioxyde de carbone ou de dioxygène accompagnant l'azote.

Comme expliqué ci-avant, on utilise ici deux gaz ayant des densités différentes c'est-à-dire deux gaz ayant des masses molaires différentes. Par exemple, le dihydrogène et le gaz naturel ont une différence de masse molaire de l'ordre de 14 grammes par mole. Cette différence est encore plus importante si l'on utilise un deuxième gaz comme l'azote ou du dioxyde de carbone. Il a été observé que l'on obtient une bonne séparation des deux gaz dans le sens vertical avec des différences de masse molaire de l'ordre de 12 grammes par mole.

En plus de la séparation, ici, on a par ailleurs une exploitation et un stockage indépendant des deux gaz.

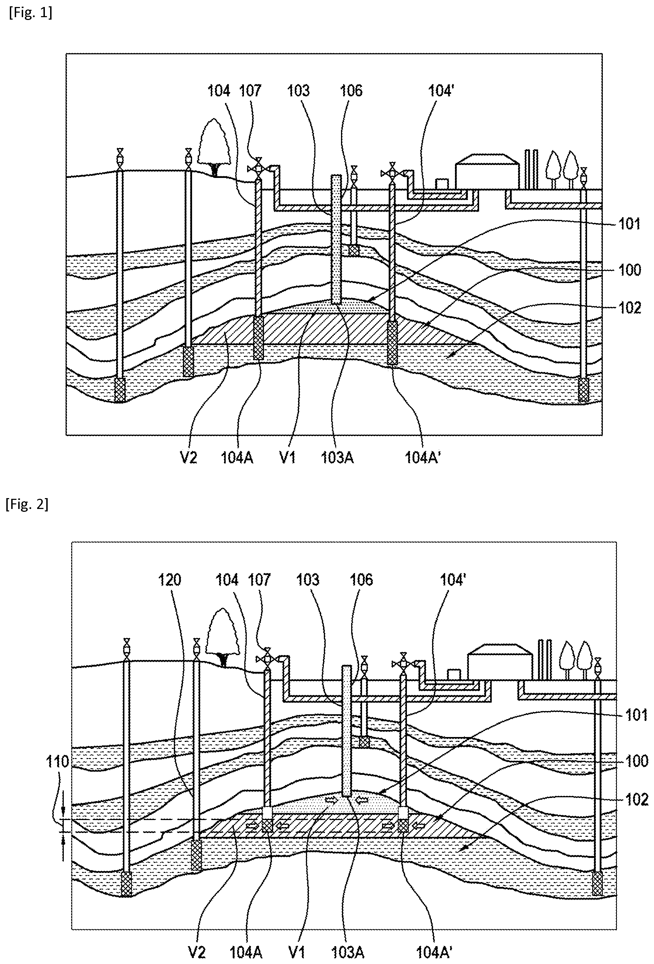

Un exemple d'installation INS est représenté sur la figure 1, où l'on voit un réservoir aquifère 100 en coupe (une installation identique est également concevable pour un réservoir déplété). Ce réservoir est limité dans sa partie supérieure par un dôme imperméable 101, et dans sa partie inférieure par de l'eau 102. La partie entre l'eau et le dôme est celle qui sera appelée ici réservoir, comprenant de la roche poreuse et qui va accueillir des gaz.

Sur l'installation de la figure 1, une pluralité de puits sont prévus. En particulier, un premier puits 103 est prévu dans une partie centrale du réservoir, et ce puits débouche dans une partie supérieure du réservoir (son extrémité basse 103A débouche dans cette partie supérieure. L'invention n'est pas limitée à un unique premier puits, et peut être mise en œuvre au moyen d'une pluralité de premiers puits qui débouchent dans la partie supérieure.

Un deuxième puits 104 est également prévu dans une partie périphérique, à gauche du premier puits 103 sur la figure, et ce puits débouche dans une partie inférieure du réservoir, située entre la partie supérieure et le fond du réservoir (son extrémité basse 104A débouche dans cette partie inférieure). De manière optionnelle, un autre deuxième puits 104' est prévu dans une partie périphérique, à droite du premier puits 101, et ce puits débouche dans la partie inférieure du réservoir (son extrémité basse 104A' débouche dans la partie inférieure). En fait, l'invention n'est pas limitée à un ou deux deuxièmes puits, et peut être mise en œuvre au moyen d'une pluralité de deuxièmes puits qui débouchent dans la partie inférieure.

On peut noter que les deux deuxièmes puits 104 et 104' se terminent dans le réservoir par des crépines 105 et 105' d'une manière connue en soi, qui débutent dans la partie inférieure et se terminent ici dans le fond du réservoir.

Le premier puits 103 est connecté à un réseau de transport 106 d'un premier gaz qui est ici du dihydrogène. L'expression réseau vise ici un ensemble de canalisations enterrées ou non, capable d'injecter du dihydrogène à travers le premier puits 103 et capable de soutirer du dihydrogène à travers le premier puits 103.

Le deuxième puits 104 est connecté à un réseau de transport 107 d'un deuxième gaz qui est ici du gaz naturel.

Si le réservoir 100 comporte initialement du gaz naturel, on peut, avec le premier puits 103, introduire du dihydrogène dans la partie supérieure du réservoir, tout en maintenant du gaz naturel dans la partie inférieure du réservoir. L'introduction de dihydrogène conduit à l'obtention d'un volume V1 de dihydrogène stocké dans le réservoir, et à l'obtention d'un volume V2 de gaz naturel stocké dans le réservoir. Sur la figure, le volume V1 désigne en fait la partie supérieure du réservoir occupée par ce volume, et le volume V2 désigne en fait la partie inférieure du réservoir. Ces deux parties sont définies par les gaz qui les composent (comme on le conçoit, une diffusion et une dispersion est possible à l'interface, cela étant, la personne du métier saura délimiter ces deux parties).

Ces deux volumes se séparent naturellement du fait de la différence de densité entre les deux gaz. Comme illustré sur la figure, le volume V1 n'est pas en contact avec le fond du réservoir et l'eau liquide, et qui permet de stocker et d'exploiter du dihydrogène dans des conditions optimales.

De ce fait, on peut mettre en œuvre des exploitations respectives du dihydrogène et du gaz naturel qui sont indépendantes l'une par rapport à l'autre. La personne du métier pourra notamment appeler cette exploitation indépendante une co-activité.

Pour améliorer encore plus l'exploitation respective des deux gaz, on peut tenir compte de la diffusion qui peut intervenir à l'interface entre les deux gaz, et éventuellement à l'interface avec l'eau.

Ainsi, sur la figure 2, on a représenté une autre installation (mais dans laquelle les références de la figure 1 sont réutilisées pour désigner les mêmes éléments), dans laquelle les ouvertures des deuxièmes puits 104 et 104', au niveau des crépines 105 et 105', diffèrent de celles de la figure 1 puisque certaines sont bouchées pour délimiter une plage de profondeur 110 dans laquelle le gaz naturel peut circuler. Ainsi, du gaz naturel qui n'est pas affecté par la présence du dihydrogène ou de l'eau est soutiré, ce qui peut avoir un impact sur la qualité de l'exploitation.

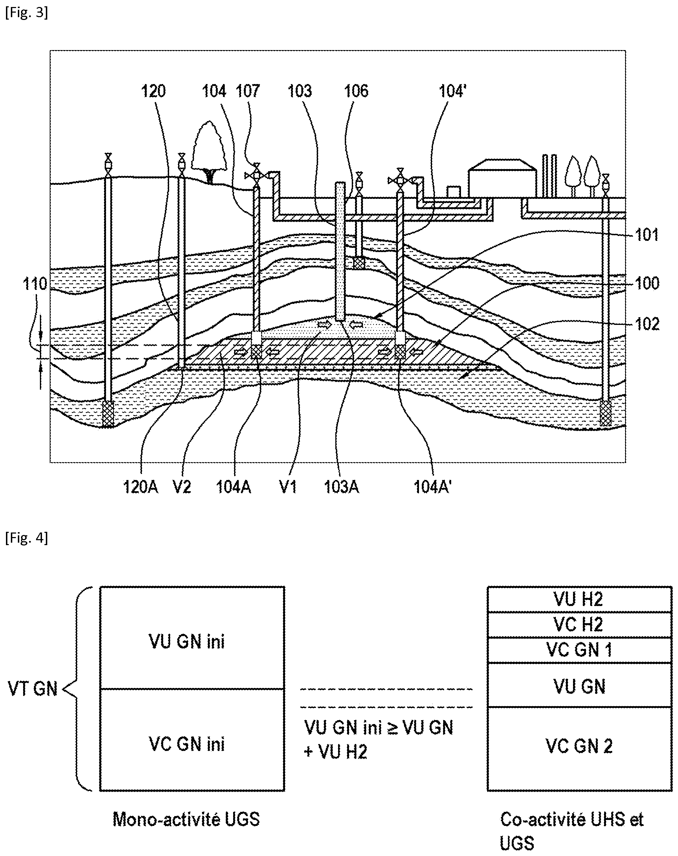

Sur la figure 3, on a représenté encore une autre installation, qui diffère de celle des figures 1 et 2 en ce qu'un troisième puits 120 est prévu, débouchant en périphérie du réservoir vers le fond du réservoir (son extrémité 120A arrive un peu avant le fond et bien en dessous des extrémités des deuxièmes puits).

Cette installation permet d'injecter un troisième gaz, typiquement un gaz inerte comme du diazote, au fond du réservoir, de sorte que l'eau n'affecte nullement la production de gaz naturel.

Dans les modes de réalisation des figures 2 et 3, des volumes dits coussins sont utilisés. Cela est davantage détaillé en référence à la figure 4.

Sur cette figure, on a sur la partie gauche une représentation schématique de la répartition du gaz naturel dans un réservoir aquifère qui ne comporte que du gaz naturel. Ainsi, la référence VT_GN désigne le volume total de gaz naturel dans ce réservoir, VU_GN_ini un volume utile de gaz naturel dans ce réservoir, et VC_GN_ini un volume coussin de gaz naturel dans ce réservoir.

Ici, on appelle volume utile un volume que l'on peut soutirer/injecter, tandis qu'un volume coussin est un volume qui n'est pas destiné à être soutiré/injecté.

Sur la partie gauche de la figure, on a une représentation schématique de la répartition des gaz dans un réservoir tel que celui de la figure 2, avec deux gaz différents et des volumes coussins. En partant du fond du réservoir, on a :
- un volume coussin inférieur VC_GN_2 de gaz naturel, à l'interface avec l'eau,
- un volume utile VU_GN de gaz naturel (comportant du gaz naturel avec un bon niveau de pureté), ce volume étant au niveau des ouvertures de la figure 2,
- un volume coussin supérieur VC_GN_1 de gaz naturel (comportant principalement du méthane),
- un volume coussin VC_H2 de dihydrogène (comprenant principalement du dihydrogène),
- un volume utile VU_H2 de dihydrogène (comprenant du dihydrogène avec un bon niveau de pureté).

On peut noter qu'entre les volumes coussins VC_GN_1 et VC_H2, on observe un gradient de la concentration du dihydrogène, qui augmente dans la direction de la surface.

A titre indicatif, on peut considérer un réservoir aquifère comprenant initialement du gaz de type gaz naturel avec un volume utile de 690 Mm³ et un volume coussin de 810 Mm³. Si l'on souhaite utiliser ce réservoir pour stocker et exploiter du dihydrogène, on peut choisir à titre indicatif un volume utile de 200 Mm³ de dihydrogène (correspondant à 16820 tonnes à une pression donnée). Pour éviter les mélanges entre les gaz, au moins dans les parties qui seront exploitées, on peut considérer que 25% du gaz coussin (la somme des volumes coussins) doit être constitué de dihydrogène, ce qui représente environ 200 Mm³ pour les 810 Mm³ de volume coussin total. Cela conduit à l'obtention d'un volume utile de 490 Mm³ de gaz naturel restant. L'utilisation du volume coussin comprenant du dihydrogène permet d'éviter les mélanges entre les deux gaz dans la partie appelée volume utile, et d'obtenir deux véritables volumes utiles. Par ailleurs, le volume utile de gaz naturel est agencé, comme cela est visible sur la figure 4, entre deux volumes coussins.

On peut noter que la garde à l'eau (distance entre la zone et le point de soutirage du second gaz) est modifiée par rapport la configuration initiale du réservoir, cette modification pouvant être acceptable.

On note par ailleurs que le rapport entre le volume utile sur le volume total est plus important lorsque le réservoir ne comporte qu'un seul gaz (gaz naturel), par rapport à lorsqu'il comporte deux gaz, si l'on conserve un même volume utile pour les deux gaz que le volume utile du gaz unique initial. Si l'on conserve le volume total constant en conditions de fond, le volume utile avec deux gaz est réduit par rapport à la configuration initiale avec un seul gaz car la garde à l'eau pour le gaz naturel est alors réduite par la nécessité de placer une partie du gaz coussin du gaz naturel en partie supérieure (VC_GN_1). On peut noter que la notion de garde à l'eau est bien connue de la personne du métier et correspond à la distance (éventuellement une élévation) à respecter entre la partie la plus basse du puits (ici de gaz naturel) et l'eau, pour éviter d'aspirer de l'eau.

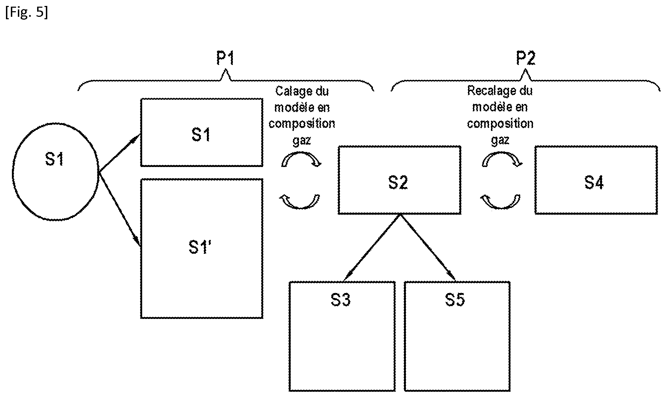

On va maintenant décrire, en référence à la figure 5, comment sont définis les volumes, par exemple les volumes de la figure 4. Ces étapes peuvent être implémentées sur un ordinateur. Les premières étapes sont des étapes mises en œuvre dans une phase initiale P1, qui précède l'utilisation du réservoir pour deux gaz.

On considère un réservoir aquifère, par exemple un nouveau réservoir (par exemple qui contient initialement de l'eau) ou un réservoir déjà exploité pour stocker du gaz naturel (en tant que deuxième gaz). En fait, le réservoir peut être un réservoir selon les normes françaises NF EN 1918-1 ou 2, dans leurs versions de juin 2016.

Dans une première étape, on peut obtenir des données d'observation du fonctionnement du réservoir.

Cette obtention peut être mise en œuvre de deux manières alternatives, et elle s'applique à la fois aux réservoirs déjà utilisés et aux nouveaux réservoirs.

A l'étape S1, on met en œuvre des tests de traçage, dans lesquels un élément inerte (parfois appelé traceur) est ajouté au gaz injecté pendant une courte période de temps (typiquement, cette injection est analogue à un signal de type Dirac). Un soutirage est alors mis en œuvre pour analyser le gaz et déterminer une concentration de l'élément qui a été injecté. Plusieurs mesures peuvent être mises en œuvre de manière régulière, et l'on observe généralement une évolution de la concentration en forme de Gaussienne déformée qui illustre le mélange entre le traceur et un gaz présent dans le réservoir, qui résulte de mécanismes de diffusion et surtout de dispersion.

Alternativement, on peut mettre en œuvre l'étape S1' dans laquelle on obtient des données d'observation de l'exploitation de gaz stockés et exploités dans le réservoir. Par exemple, si le réservoir a été utilisé pour stocker et exploiter successivement différents gaz avec des compositions différentes, on peut utiliser les données d'observation de l'exploitation associées. En fait, ces données peuvent indiquer une évolution de la composition du gaz dans le temps, et sont analogues aux données obtenues par la mise en œuvre de l'étape S1.

En fait, dans la présente description, des données d'observation peuvent être des courbes de concentration d'un gaz en fonction du temps.

Ensuite, on peut mettre en œuvre l'étape S2 dans laquelle on utilise un modèle de réservoir qui est calé au moyen des données obtenues aux étapes S1 ou S1'. Plus précisément, on peut utiliser un modèle de réservoir simulant les écoulements dynamiques des gaz, les mécanismes de transport des gaz ainsi que les mécanismes réactionnels physico-chimiques entre les gaz, l'eau et la roche ; ceci permet de simuler la composition du gaz qui sera soutiré à une localisation/profondeur donnée dans le stockage. On connait différentes solutions pour modéliser un stockage. En effet, il existe plusieurs codes commerciaux ou académiques capable de simuler a minima les mécanismes compositionnels de mélange des gaz. On peut citer comme exemples non exhaustifs ECLIPSE 300 commercialisé par la société SCHLUMBERGER ou encore STARS commercialisé par la société canadienne COMPUTER MODELLING GROUP LTD, comme codes commerciaux possibles. On connait également le code HYTEC développé par l'Ecole des Mines de Paris.

Ce modèle peut, grâce audit calage, refléter les hétérogénéités du réservoir dans les valeurs de composition qu'il délivre.

On peut ensuite mettre en œuvre l'étape S3 de dimensionnement du réservoir, dans laquelle on détermine au moyen du modèle les volumes utiles et coussins utilisables pour le réservoir (par exemple pour avoir un niveau de pureté donné pour les volumes utiles).

Par exemple pour un stockage et une exploitation de gaz naturel et de dihydrogène, cette étape peut comporter la détermination des volumes VC_GN_2, VU_GN, VC_GN_1, VH_H2, et VU_H2 décrits ci-avant.

Le modèle permet également de déterminer les débits à utiliser pour l'exploitation, etc. On peut en outre tenir compte des incertitudes inhérentes à un modèle de sous-sol, pour obtenir une bonne exploitation indépendante des deux gaz.

Ces étapes sont mises en œuvre au cours de la phase P1 qui précède le stockage et l'exploitation des deux gaz.

Dans la phase d'exploitation P2 du réservoir, pendant l'exploitation indépendante des deux gaz, on peut mettre en œuvre une étape S4 dans laquelle on obtient des données d'observation d'exploitation des deux gaz d'une manière analogue à ce qui a été mis en œuvre dans la phase P1 à l'étape S1'. On peut ainsi observer les évolutions de la composition des gaz soutirés, en fonction du temps et des différents volumes présents dans le réservoir, et des différents débits utilisés.

Dans cette étape S4, on peut comparer les données observées avec celles obtenues dans la phase initiale, ce qui permet de recaler (étape S5) le modèle avec de nouveaux paramètres, et ensuite, de déterminer de nouveaux volumes et débits pour le réservoir.

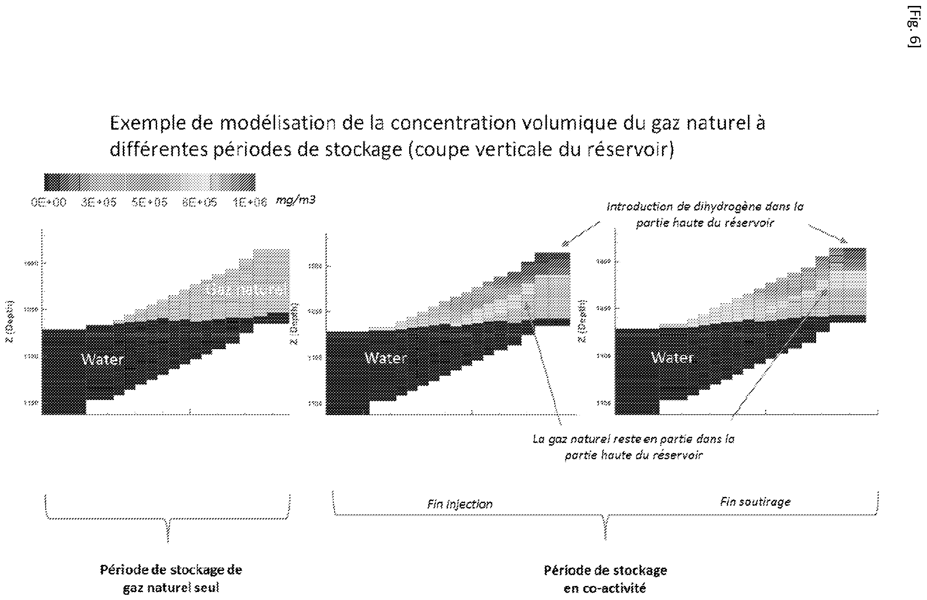

La figure 6 présente trois représentations graphiques de modélisations numériques de la concentration volumique du gaz naturel dans un réservoir dans lequel on va injecter du dihydrogène et qui contenait initialement du gaz naturel. Les trois représentations correspondent à des coupes verticales d'une portion du réservoir puisque l'on peut voir la concentration volumique du gaz naturel selon une direction horizontale, du bord du réservoir à son centre, et dans une direction verticale, du fond du réservoir (là où de l'eau est présente) au sommet du réservoir.

Sur la représentation graphique de gauche, le réservoir comporte uniquement du gaz naturel au-dessus de l'eau. La représentation du milieu correspond à l'introduction de dihydrogène dans la partie haute du réservoir (plus précisément à la situation en fin d'injection de dihydrogène), et l'on peut voir que la concentration de gaz naturel diminue dans cette partie. La représentation de droite correspond à la situation après un soutirage de dihydrogène, la modélisation montre bien que même après un soutirage, on a toujours une concentration faible de gaz naturel dans la partie haute du réservoir.

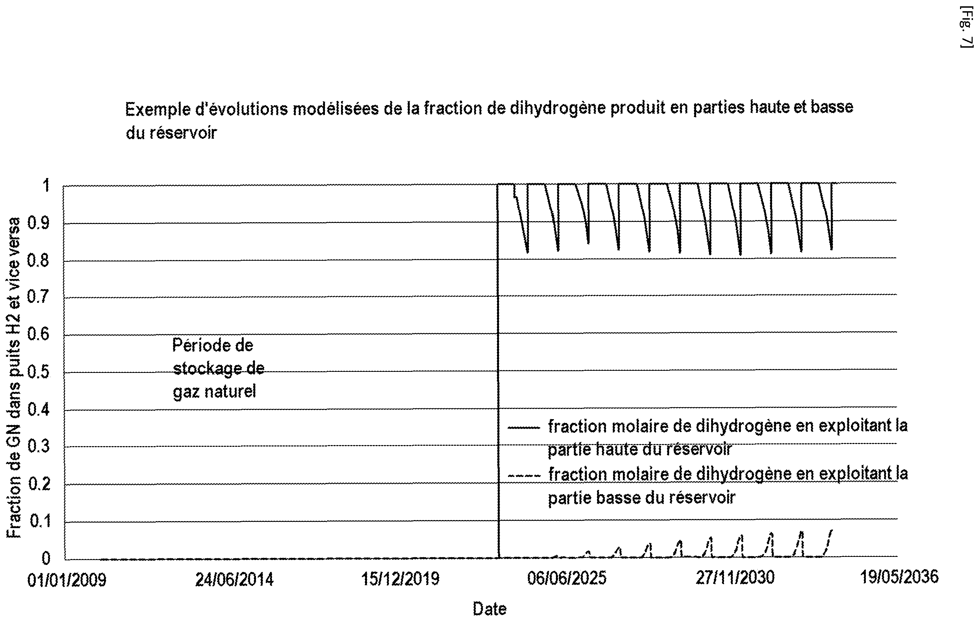

La figure 7 montre une modélisation de l'évolution dans le temps de la fraction de dihydrogène produit (ce qui est obtenu lors d'un soutirage), à la fois dans la partie haute d'un réservoir et dans la partie basse (par deux puits distincts), après l'introduction de dihydrogène dans un réservoir contenant initialement du gaz naturel.

Comme on peut le voir, après l'introduction de dihydrogène, on a toujours une fraction molaire de dihydrogène dans la partie haute qui est au-dessus de 80% (les valeurs les plus basses correspondent à la fin de phases de soutirage). Dans la partie basse du réservoir, la fraction molaire de dihydrogène reste inférieure à 10%, ce qui peut être acceptable pour des applications.

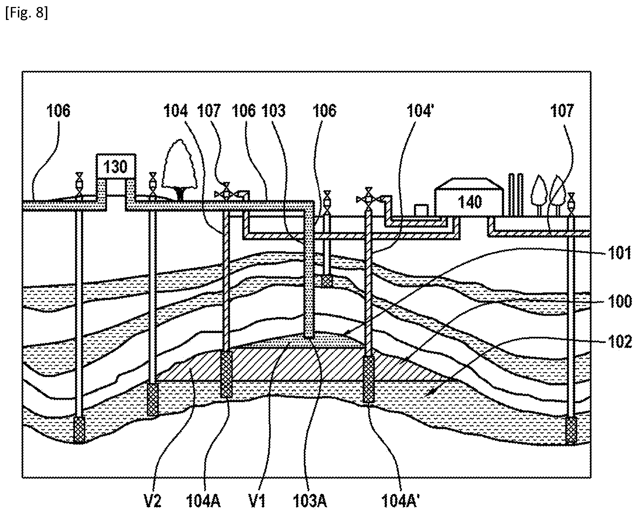

La figure 8 montre une installation analogue à celle de la figure 1, non limitative et fournie à titre d'exemple, sur laquelle on a rendu davantage visibles les réseaux de transport du premier gaz et du deuxième gaz.

Plus précisément, on a représenté ici de manière plus complète le réseau de transport 106 du premier gaz, et le réseau de transport 107 du deuxième gaz.

Au sein du réseau de transport du premier gaz, on a représenté un atelier de traitement 130 du premier gaz, par exemple utilisé pour mettre en œuvre une déshydratation et une désulfuration du premier gaz.

Un atelier de traitement 140 du deuxième gaz est également référencé sur la figure, cet atelier étant agencé au sein du réseau de transport du deuxième gaz. Aussi, cet atelier de traitement est par exemple utilisé pour mettre en œuvre une déshydratation et une désulfuration du deuxième gaz.

Les installations et procédés décrits ci-avant permettent de stocker et d'exploiter de manière indépendante deux gaz, dans la mesure où ces deux gaz ont des densités différentes.

On peut ainsi soutirer un premier gaz pendant que le deuxième gaz est injecté ou soutiré ou juste stocké, injecter le premier gaz pendant que le deuxième gaz est injecté ou soutiré ou juste stocké. On peut également soutirer le deuxième gaz pendant que le premier gaz est injecté ou soutiré ou juste stocké, injecter le deuxième gaz pendant que le premier gaz est injecté ou soutiré ou juste stocké.

Cela est bien adapté pour le stockage de dihydrogène avec celui de gaz naturel, compte tenu du fait que les cycles de stockage de gaz naturel sont saisonniers, et ceux du dihydrogène peuvent être plus rapides.

## Revendications

1. Procédé de stockage et d'exploitation d'un premier gaz et d'un deuxième gaz plus dense que le premier gaz dans un réservoir aquifère ou déplété (100), au moyen d'une installation comprenant :
- un premier puits (103) débouchant dans une partie supérieure (V1) du réservoir et connecté à un réseau de transport du premier gaz (106),
- un deuxième puits (104, 104') débouchant sur une partie inférieure (V2) du réservoir et connecté à un réseau de transport du deuxième gaz (107), le procédé comprenant un stockage du premier gaz dans la partie supérieure du réservoir, un stockage du deuxième gaz dans la partie inférieure du réservoir, une exploitation du premier gaz par le premier puits, et une exploitation du deuxième gaz par le deuxième puits, l'exploitation du premier gaz pouvant être mise en œuvre de manière simultanée et séparée de l'exploitation du deuxième gaz.

2. Procédé selon la revendication 1, dans lequel le premier gaz est du dihydrogène.

3. Procédé selon la revendication 1 ou 2, dans lequel le deuxième est du gaz naturel.

4. Procédé selon l'une quelconque des revendications 1 à 3, dans lequel l'exploitation du premier gaz comporte une exploitation d'un seul volume dit utile du premier gaz, le procédé comportant une étape de définition du volume utile du premier gaz, le volume total du premier gaz dans le réservoir étant égal à la somme du volume utile du premier gaz avec un volume dit coussin du premier gaz situé à l'interface avec le deuxième gaz.

5. Procédé selon l'une quelconque des revendications 1 à 4, dans lequel l'exploitation du deuxième gaz comporte une exploitation d'un seul volume dit utile du deuxième gaz, le procédé comportant une étape de définition du volume utile du deuxième gaz, le volume total du deuxième gaz dans le réservoir étant égal à la somme du volume utile du deuxième gaz avec un volume dit coussin supérieur du deuxième gaz situé à l'interface avec le premier gaz et un autre volume dit coussin inférieur du deuxième gaz situé sous le volume utile du deuxième gaz.

6. Procédé selon les revendications 4 et 5, dans lequel les étapes de définitions du volume utile du premier gaz et du volume utile du deuxième gaz sont réalisées au cours d'une phase préalable dans laquelle on utilise des données d'observation du fonctionnement du réservoir et une modélisation du réservoir.

7. Procédé selon la revendication 6, dans lequel les données d'observation du fonctionnement du réservoir sont obtenues par des tests de traçage ou par des données d'observation de l'exploitation successive de gaz différents dans le réservoir.

8. Procédé selon la revendication 6 ou 7, comprenant une mise à jour du volume utile du premier gaz et du volume utile du deuxième gaz tenant compte de données d'observation de l'exploitation du premier gaz ou de l'exploitation du deuxième gaz.

9. Procédé selon l'une quelconque des revendications 1 à 8, dans lequel on stocke un troisième gaz plus dense que le deuxième gaz entre le deuxième gaz et l'eau du réservoir.

10. Procédé selon l'une quelconque des revendications 1 à 9, dans lequel le réservoir comporte initialement uniquement du deuxième gaz, ou, si le procédé est celui de la revendication 9, uniquement du troisième gaz.

11. Installation de stockage et d'exploitation d'un premier gaz et d'un deuxième gaz plus dense que le premier gaz dans un réservoir aquifère ou déplété (100), comprenant :
- un premier puits (103) débouchant dans une partie supérieure (V1) du réservoir et connecté à un réseau de transport du premier gaz (106),
- un deuxième puits (104, 104A) débouchant sur une partie inférieure (V2) du réservoir et connecté à un réseau de transport du deuxième gaz (107), l'installation étant configurée pour permettre un stockage du premier gaz dans la partie supérieure du réservoir, un stockage du deuxième gaz dans la partie inférieure du réservoir, une exploitation du premier gaz par le premier puits, et une exploitation du deuxième gaz par le deuxième puits, l'exploitation du premier gaz pouvant être mise en œuvre de manière simultanée et séparée de l'exploitation du deuxième gaz.

## Patentansprüche

1. Verfahren zum Speichern und zur Nutzung eines ersten Gases und eines zweiten Gases, welches dichter als das erste Gas ist, in einem Aquifer oder einem ausgeschöpften Reservoir (100) mit Hilfe einer Anlage, umfassend:
- ein erstes Bohrloch (103), das in einen oberen Teil (V1) des Reservoirs mündet und mit einem Transportnetz des ersten Gases (106) verbunden ist,
- einen zweites Bohrloch (103), das in einen unteren Teil (V2) des Reservoirs mündet und mit einem Transportnetz des zweiten Gases (107) verbunden ist, wobei das Verfahren eine Speicherung des ersten Gases im oberen Teil des Reservoirs, eine Speicherung des zweiten Gases im unteren Teil des Reservoirs, eine Nutzung des ersten Gases durch das erste Bohrloch und eine Nutzung des zweiten Gases durch das zweite Bohrloch umfasst, wobei die Nutzung des ersten Gases gleichzeitig mit und getrennt von der Nutzung des zweiten Gases erfolgen kann.

2. Verfahren nach Anspruch 1, wobei das erste Gas Diwasserstoff ist.

3. Verfahren nach Anspruch 1 oder 2, wobei das zweite Gas Erdgas ist.

4. Verfahren nach einem der Ansprüche 1 bis 3, wobei die Nutzung des ersten Gases die Nutzung eines einzigen Volumens, bezeichnet als Nutzvolumen, des ersten Gases umfasst, wobei das Verfahren einen Schritt zur Definierens des Nutzvolumens des ersten Gases, umfasst, wobei das Gesamtvolumen des ersten Gases im Reservoir gleich der Summe des Nutzvolumens des ersten Gases mit einem Volumen, bezeichnet als Puffervolumen, des ersten Gases, das sich an der Schnittstelle mit dem zweiten Gas befindet, ist.

5. Verfahren nach einem der Ansprüche 1 bis 4, wobei die Nutzung des zweiten Gases eine Nutzung eines einzigen Volumens, bezeichnet als Nutzvolumen, des zweiten Gases umfasst, wobei das Verfahren einen Schritt zur Definierens des Nutzvolumens des zweiten Gases umfasst, wobei das Gesamtvolumen des zweiten Gases im Reservoir gleich der Summe des Nutzvolumens des zweiten Gases mit einem Volumen, bezeichnet als Puffervolumen, des zweiten Gases, das sich an der Schnittstelle mit dem ersten Gas befindet, und einem weiteren Volumen, bezeichnet als unteres Puffervolumen des zweiten Gases ist, das sich unter dem Nutzvolumen des zweiten Gases befindet, ist.

6. Verfahren nach Anspruch 4 und 5, wobei die Schritte des Definierens des Nutzvolumens des ersten Gases und des Nutzvolumens des zweiten Gases im Laufe einer vorherigen Phase durchgeführt werden, in der Beobachtungsdaten des Betriebs des Reservoirs und eines Modells des Reservoirs verwendet werden.

7. Verfahren nach Anspruch 6, wobei die Beobachtungsdaten des Betriebs des Reservoirs durch Markierungstests oder durch Beobachtungsdaten der sukzessiven Nutzung von verschiedenen Gasen im Reservoir erhalten werden.

8. Verfahren nach Anspruch 6 oder 7, umfassend eine Aktualisierung des Nutzvolumens des ersten Gases und des Nutzvolumens des zweiten Gases unter Berücksichtigung von Beobachtungsdaten der Nutzung des ersten Gases oder der Nutzung des zweiten Gases.

9. Verfahren nach einem der Ansprüche 1 bis 8, wobei ein drittes Gas, welches dichter als das zweite Gas ist, zwischen dem zweiten Gas und dem Wasser des Reservoirs gespeichert wird.

10. Verfahren nach einem der Ansprüche 1 bis 9, wobei das Reservoir anfänglich nur das zweite Gas oder, wenn das Verfahren dasjenige von Anspruch 9 ist, nur das dritte Gas umfasst.

11. Verfahren zum Speichern und zur Nutzung eines ersten Gases und eines zweiten Gases, welches dichter als das erste Gas ist, in einem Aquifer oder einem ausgeschöpften Reservoir (100), umfassend:
- ein erstes Bohrloch (103), das in einen oberen Teil (V1) des Reservoirs mündet und mit einem Transportnetz des ersten Gases (106) verbunden ist,
- ein zweites Bohrloch (104, 104A), das in einen unteren Teil (V2) des Reservoirs mündet und mit einem Transportnetz des zweiten Gases (107) verbunden ist, wobei die Anlage konfiguriert ist, um eine Speicherung des ersten Gases im oberen Teil des Reservoirs, eine Speicherung des zweiten Gases im unteren Teil des Reservoirs, eine Nutzung des ersten Gases durch das erste Bohrloch und eine Nutzung des zweiten Gases durch das zweite Bohrloch zu ermöglichen,
wobei die Nutzung des ersten Gases gleichzeitig mit und getrennt von der Nutzung des zweiten Gases erfolgen kann.

## Claims

1. A method for storing and mining a first gas and a second gas denser than the first gas in a water bearing or depleted reservoir (100), by means of an installation comprising:
- a first well (103) opening into an upper part (V1) of the reservoir and connected to a transport network for the first gas (106),
- a second well (104,104') opening into a lower part (V2) of the reservoir and connected to a transport network for the second gas (107),
the method comprising storing the first gas in the upper part of the reservoir, storing the second gas in the lower part of the reservoir, mining the first gas by the first well, and mining the second gas by the second well, the mining of the first gas being able to be implemented simultaneously and separately from the mining of the second gas.

2. The method according to claim 1, wherein the first gas is dihydrogen.

3. The method according to claim 1 or 2, wherein the second gas is natural gas.

4. The method according to any one of claims 1 to 3, wherein the mining of the first gas includes mining only a so-called useful volume of the first gas, the method includes a step of defining the useful volume of the first gas, the total volume of the first gas in the reservoir being equal to the sum of the useful volume of the first gas with a so-called cushion volume of the first gas located at the interface with the second gas.

5. The method according to any one of claims 1 to 4, wherein the mining of the second gas includes mining only a so-called useful volume of the second gas, the method includes a step of defining the useful volume of the second gas, the total volume of the second gas in the reservoir being equal to the sum of the useful volume of the second gas with a so-called upper cushion volume of the second gas located at the interface with the first gas and another so-called lower cushion volume of the second gas located below the useful volume of the second gas.

6. The method according to claims 4 and 5, wherein the steps of defining the useful volume of the first gas and the useful volume of the second gas are carried out during a preliminary phase wherein observation data of the reservoir operation and a reservoir model are used.

7. The method according to claim 6, wherein the observation data of the reservoir operation are obtained by tracer tests or by observation data from the successive mining of different gases in the reservoir.

8. The method according to claim 6 or 7, includes an update of the useful volume of the first gas and the useful volume of the second gas taking into account observation data from the mining of the first gas or the mining of the second gas.

9. The method according to any one of claims 1 to 8, wherein a third gas denser than the second gas is stored between the second gas and the water of the reservoir.

10. The method according to any one of claims 1 to 9, wherein the reservoir initially includes only the second gas, or, if the method is that of claim 9, only the third gas.

11. An installation for storing and mining a first gas and a second gas denser than the first gas in a water bearing or depleted reservoir (100), comprising:
- a first well (103) opening into an upper part (V1) of the reservoir and connected to a transport network for the first gas (106),
- a second well (104,104A) opening into a lower part (V2) of the reservoir and connected to a transport network for the second gas (107), the installation being configured to allow storage of the first gas in the upper part of the reservoir, storage of the second gas in the lower part of the reservoir, mining of the first gas by the first well, and mining of the second gas by the second well, the mining of the first gas being able to be implemented simultaneously and separately from the mining of the second gas.
